# EUROPÄISCHE PATENTSCHRIFT

(11) **EP 1 386 829 B1**
(45) Veröffentlichungstag und Bekanntmachung des Hinweises auf die Patenterteilung: **24.01.2007**
(21) Anmeldenummer: 03010150.5
(22) Anmeldetag: 06.05.2003
(51) Int. Cl.: B62D 25/08

(54) **Aufbaustruktur eines Personenkraftwagens**
Body structure of a motor vehicle
Structure de carrosserie de véhicule automobile

(30) Priorität: 02.08.2002 DE 10235382
(43) Veröffentlichungstag der Anmeldung: 04.02.2004
(73) Patentinhaber: Dr.Ing. h.c.F. Porsche Aktiengesellschaft, 70435 Stuttgart (DE)
(72) Erfinder: Winter, Fred, 71277 Rutesheim (DE); Eberhardt, Heinz, 71287 Weissach (DE); Praznic, Franc, 71229 Leonberg (DE); Sautter, Frank, 72770 Reutlingen (DE); Oggianu, Roberto, 71229 Leonberg (DE)

(56) Entgegenhaltungen:
- EP-A- 0 836 983

## Beschreibung

Die Erfindung bezieht sich auf eine Aufbaustruktur eines Personenkraftwagens gemäß dem Oberbegriff des Patentanspruchs 1.

Die DE 44 22 498 C1 offenbart eine Aufbaustruktur eines Personenkraftwagens mit einer zwischen dem Vorderwagen und dem Fahrgastraum angeordneten Stirnwand, mit zumindest zwei voneinander beabstandeten vorderen Längsträgern, die an die Stirnwand angeschlossen sind, mit seitlich außenliegenden Schwellern, einem Boden und aufrechten Scharniersäulen, wobei im Bereich der Stirnwand eine Trägerstruktur vorgesehen ist, über die die vorderen Längsträger kraftübertragend an die aufrechten Scharniersäulen, die Schweller, die Stirnwand und den Mitteltunnel angeschlossen sind.

Bei dieser Anordnung sind die beiden vorderen geradlinigen Längsträger durchgehend bis zur Stirnwand herangeführt und mit dieser und einem ersten außenseitig auf die Stirnwand aufgesetzten Querträger kraftübertragend verbunden. Ferner ist in Höhe der vorderen Längsträger auf der dem Fahrgastraum zugekehrten Seite der Stirnwand ein zweiter Querträger vorgesehen, der durch die Stirnwand und ein aufgesetztes hutförmig profiliertes Blechpressteil gebildet wird. In schrägverlaufenden äußeren Bereichen teilt sich der zweite Querträger in zwei übereinanderliegende Hohlträgerabschnitte. Der obere Hohlträgerabschnitt ist an die Innenseite der aufrechten Scharniersäule angeschlossen, wogegen der untere Hohlträgerabschnitt an die Innenseite des Schwellers bzw. des Bodens angebunden ist.

Nachteilig an dieser Anordnung ist, dass zur Herstellung der die Trägerstruktur bildenden Blechpressteile einerseits hohe Werkzeugkosten anfallen und dass andererseits aus Blechpressteilen gebildete Trägerstrukturen lediglich ein begrenztes Energieaufnahmepotential bei einem Crash besitzen.

Die gattungsgemäße EP 0 836 983 A2 zeigt einen Vorderwandrahmen für eine selbsttragende Karosserie eines Personenkraftwagens, wobei dieser Vorderwandrahmen durch eine Spaceframe-Konstruktion gebildet wird, das heißt, der Vorderwandrahmen besteht aus Strangpressprofilen und Gussteilen, die in geeigneter Weise miteinander verbunden sind.

Aufgabe der Erfindung ist es, eine im Bereich der Stirnwand vorgesehene Trägerstruktur eines Fahrzeuges so weiterzubilden, daß sie bei kostengünstiger Herstellung ein deutlich erhöhtes Energieaufnahmepotential besitzt, um erhöhte Crashanforderungen zu erfüllen.

Erfindungsgemäß wird diese Aufgabe durch die Merkmale des Anspruchs 1 gelöst. Weitere die Erfindung weiterbildende Merkmale sind in den Unteransprüchen enthalten.

Die mit der Erfindung hauptsächlich erzielten Vorteile sind darin zu sehen, daß durch die Ausbildung der Trägerstruktur als steifer Rohrrahmen einerseits die Werkzeugkosten deutlich reduziert werden und daß andererseits das Energieaufnahmevermögen bei einem Crash wesentlich erhöht wird. Der Rohrrahmen läßt sich kostengünstig herstellen und einfach in die Aufbaustruktur integrieren. Das Querrohr des Rohrrahmens wirkt als steifer Biegeträger, der über ein mittleres Abstützrohr am Mitteltunnel und über seitliche Abstützrohre an den Scharniersäulen bzw. den tieferliegenden Schwellern wirkungsvoll abgestützt ist.

Bei mehrteiliger Ausbildung des Querrohrs sind die Seitenteile in das Mittelteil eingesteckt, wobei in den Verbindungsbereichen der Seitenteile mit dem Mittelteil zusätzlich Gußknoten in das Mittelteil eingesteckt sind, die die Seitenteile geführt aufnehmen.

Durch den vorzugsweise aus hochfesten Rohren gefertigten Rohrrahmen läßt sich bei gleichem Gewicht die Energieaufnahme um etwa 30 % erhöhen. Zudem wird bei einem Aufprallstoß durch den Rohrrahmen die Eindringtiefe in den Fußraum deutlich verringert. Die Anbringung des Querrohrs des Rohrrahmens in einer nischenförmigen Aufnahme der Stirnwand vergrößert den Fußraum für die Fahrzeuginsassen. Die abgewinkelten seitlichen Abstützrohre entlasten den Knoten Scharniersäule-Schweller und sorgen für eine äußerst wirkungsvolle Abstützung der Scharniersäule am tieferliegenden Schweller. Vorzugsweise erstrecken sich die seitlichen Abstützrohre - in Längsrichtung gesehen - bis zu einem am Boden angeordneten Sitzquerträger, der relativ weit von der Stirnwand entfernt ist.

Durch die Verwendung von Tailored Blanks zumindest für die Innenteile der vorderen Längsträger wird ein sauberes Falten der vorderen Längsträger bei einem Aufprallstoß gewährleistet. Innenseitig an der vorderen Kofferraummulde eingesetzte etwa U-förmige Einleger bilden zusammen mit der Kofferraummulde einen Sandwichboden, der somit eine untere Lastebene zur Aufnahme von Deformationsenergie bildet.

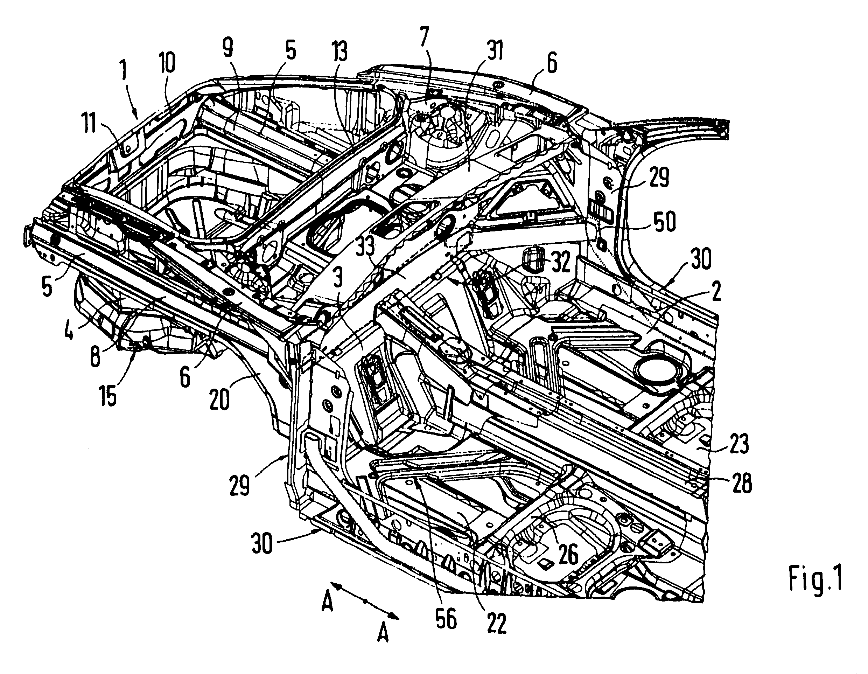

In der Zeichnung wird ein Ausführungsbeispiel der Erfindung näher erläutert.
Es zeigt
- Fig. 1: eine perspektivische Ansicht von schräg hinten auf eine vordere Aufbaustruktur eines Personenkraftwagens,
- Fig. 2: eine perspektivische Ansicht von schräg vorne und unten auf die vordere Aufbaustruktur des Personenkraftwagens,
- Fig. 3: eine perspektivische Teilansicht auf den vor der Stirnwand liegenden Bereich der Aufbaustruktur mit den vorderen Längsträgern,
- Fig. 4: eine perspektivische Ansicht von schräg hinten auf die Aufbaustruktur mit dem Rohrrahmen,
- Fig. 5: in Explosionsdarstellung die Bauteile des Querrohrs des Rohrrahmens,
- Fig. 6: einen Horizontalschnitt durch das Querrohr im Verbindungsbereich von Mittelteil und Seitenteil in größerer Darstellung,
- Fig. 7: einen Schnitt nach der Linie VII-VII der Figur in größerer Darstellung,
- Fig. 8: einen Schnitt nach der Linie VIII-VIII der Figur in größerer Darstellung und
- Fig. 9: einen Schnitt nach der Linie IX-IX der Figur in größerer Darstellung.

Eine vordere Aufbaustruktur 1 eines Personenwagens wird im wesentlichen gebildet durch eine einen Fahrgastraum 2 begrenzende Stirnwand 3 und Radhauswandungen 4, die in Fahrzeuglängsrichtung A-A verlaufen. An jede Radhauswandung 4 ist ein unterer vorderer Längsträger 5 und ein oberer vorderer Längsträger 6 angeschlossen. Ferner ist im Bereich jeder Radhauswandung 4 eine Federbeinaufnahme 7 vorgesehen.

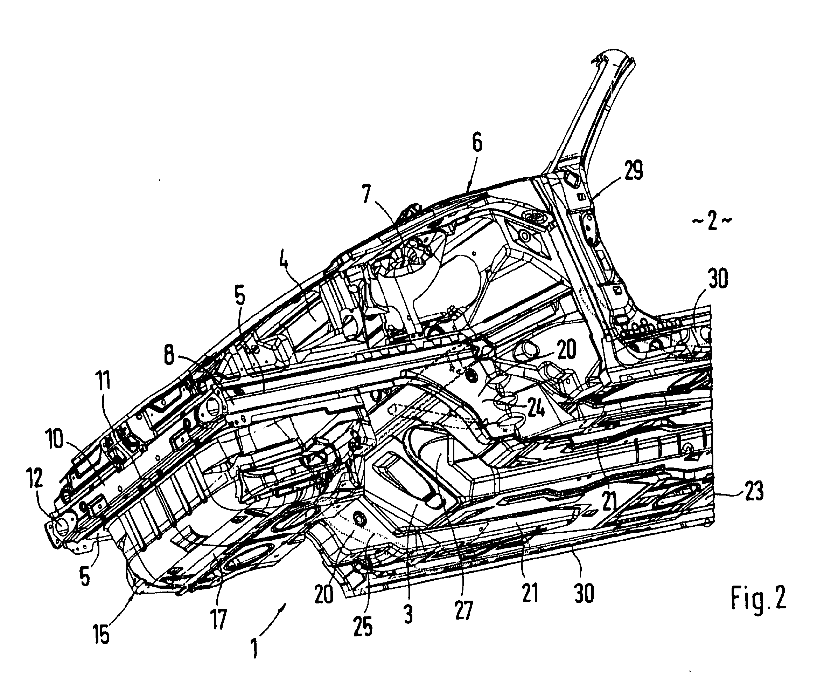

Der - im Querschnitt gesehen - etwa sechs- oder achteckig ausgebildete untere vordere Längsträger 5 setzt sich aus einem äußeren Trägerabschnitt 8 und einem inneren Trägerabschnitt 9 zusammen, die einen geschlossenen Hohlkörper bilden (Fig. 2).

Zumindest der innere Trägerabschnitt 8 des vorderen Längsträgers 5 ist in Tailored-Blank-Bauweise ausgebildet, wobei die Wanddicke in mehreren Stufen zur Stirnwand 3 hin zunimmt. Auch der äußere Trägerabschnitt 9 kann dergestalt ausgebildet sein. Dadurch wird ein definiertes, sauberes Falten der vorderen Längsträger 5 bei einem frontseitigen Aufprallstoß gewährleistet. Die beiden unteren vorderen Längsträger 5 sind durch einen hohlträgerartigen Querträger 10 miteinander verbunden, der sich aus zwei schalenförmigen Blechpreßteilen zusammensetzt. In einem mittleren Bereich der Quererstreckung des Querträgers 10 ist eine Schloßaufnahme 11 für eine nicht näher dargestellte vordere Haube angeordnet.

An den vorderen Enden weisen beide Längsträger 5 jeweils eine Aufnahme 12 für nicht näher gezeigte Pralldämpfer eines Stoßfängersystems auf. Im Bereich einer der Stirnwand 3 vorgelagerten Schottwand 13 ist ein weiterer Querträger 14 vorgesehen, der außenseitig mit den angrenzenden unteren vorderen Längsträgern 5 verbunden ist. Der Querträger 14 wird ebenfalls durch zwei zu einem Hohlträger zusammengesetzten Blechpreßteilen gebildet.

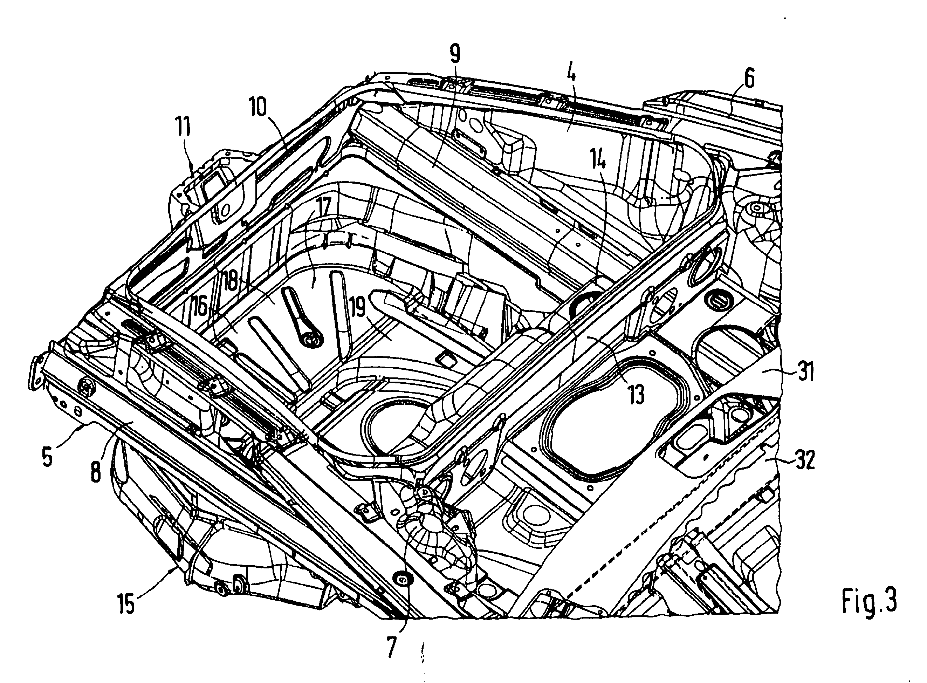

Eingerahmt von den beiden vorderen Längsträgern 5 sowie den Querträgern 10 und 14 erstreckt sich eine nach unten hin ragende Kofferraummulde 15. Gemäß Fig. 3 weist die Kofferraummulde 15 auf der der Fahrbahn abgekehrten Seite einen - in der Draufsicht gesehen - U-förmigen Einleger 16 auf, so daß eine energieaufnehmende sandwichförmige Bodenstruktur 17 im Bereich der Kofferraummulde 15 geschaffen wird. Der Einleger 16 weist einen querverlaufenden vorderen Bereich 18 und seitliche längsgerichtete Schenkel 19 auf. Die doppelwandige Bodenstruktur 17 wirkt bei einem frontseitigen Aufprallstoß als untere Lastebene.

In der Seitenansicht gesehen erstrecken sich die Längsträger 5 etwa horizontal ausgerichtet vom vorderen Querträger 10 durchgehend bis zur Stirnwand 3.

Vor der Stirnwand 3 erweitert sich der Längsträger 5 nach unten hin und ist über einen Anschlußträger 20 an einen tieferliegenden längsgerichteten Bodenträger 21 angeschlossen. Der Bodenträger 21 wird durch ein hutförmig profiliertes Blech 22 gebildet, das auf die Unterseite des Bodens 23 aufgesetzt ist. Der Anschlußträger 20 ist mit seinem hinteren Ende an die Stirnwand 3 angeschlossen und setzt sich aus einer einstückigen Anformung 24 des äußeren Trägerabschnitts 8 des Längsträgers 5 und einem separaten profilierten Trägerblech 25 zusammen.

Der Anschlußträger 20 könnte jedoch auch einstückig mit dem Längsträger 5 oder dem Bodenträger 21 ausgebildet sein. In der Draufsicht gesehen verlaufen der Anschlußträger 20 und der nachfolgende Bodenträger 21 in geradliniger Verlängerung des vorderen Längsträgers 5. Ein hinteres Ende des Bodenträgers 21 ist etwa bis zu einem auf die Oberseiten des Bodens 23 aufgesetzten Sitzquerträgers 26 geführt oder überragt diesen nach hinten hin.

Die querverlaufende Stirnwand 3 weist in einem mittleren Bereich ihrer Quererstreckung eine Aussparung 27 auf, an die ein längsverlaufender Mitteltunnel 28 angeschlossen ist. An ihren seitlich außenliegenden Enden ist die Stirnwand 3 an eine jeweils angrenzende aufrechte Scharniersäule 29 angebunden, und zwar an deren Innenseite. Die aufrechten Scharniersäulen 29 sind mit ihren unteren Enden auf seitlich außenliegende horizontale Schweller 30 aufgesetzt.

Jeder obere Längsträger 6 ist an die korrespondierende Scharniersäule 29 angeschlossen und weist von der Scharniersäule 29 bis kurz nach der Federaufnahme 7 eine hohlträgerartige Struktur auf. Weiter vorne ist lediglich ein abgewinkelter Flansch weitergeführt, an dem angrenzende nicht näher dargestellte Kotflügel lösbar befestigt sind. In Höhe der oberen Längsträger 6 sind die beiden Scharniersäulen 29 durch einen Windlaufquerträger 31 miteinander verbunden.

Eine gute Krafteinleitung von den unteren vorderen Längsträgern 5 in die angrenzende Aufbaustruktur 1 wird dadurch erreicht, daß die beiden vorderen geradlinigen Längsträger 5 durchgehend bis zur Stirnwand 3 herangeführt und kraftübertragend mit dieser verbunden sind. Auf Höhe der unteren vorderen Längsträger 5 ist auf der dem Fahrgastraum 2 zugekehrten Seite eine Trägerstruktur 32 vorgesehen, die die beiden vorderen Längsträger 5 kraftübertragend mit den aufrechten Scharniersäulen 29, den tieferliegenden Schwellern 30, der Stirnwand 3 sowie dem Mitteltunnel 28 verbindet.

Erfindungsgemäß wird die Trägerstruktur 32 durch einen steifen Rohrrahmen 33 gebildet. Der steife Rohrrahmen 33 ist vorzugsweise aus hochfestem Werkstoff gefertigt und umfaßt ein ein- oder mehrteilig ausgebildetes etwa horizontal ausgerichtetes Querrohr 34, das über ein mittleres Abstützrohr 35 und seitliche Abstützrohre 36 wirkungsvoll an der Aufbaustruktur 1 abgestützt ist. Das Querrohr 34 besteht aus einem geradlinigen querverlaufenden Mittelteil 37 und zwei daran angeschlossenen schrägverlaufenden Seitenteilen 38. Die Seitenteile 38 erstrecken sich von den seitlichen Enden des Mittelteils 37 schräg nach außen und hinten zu den angrenzenden Scharniersäulen 29. Das Mittelteil 37 und die beiden Seitenteile 38 des Querrohrs 34 können einstückig ausgebildet sein.

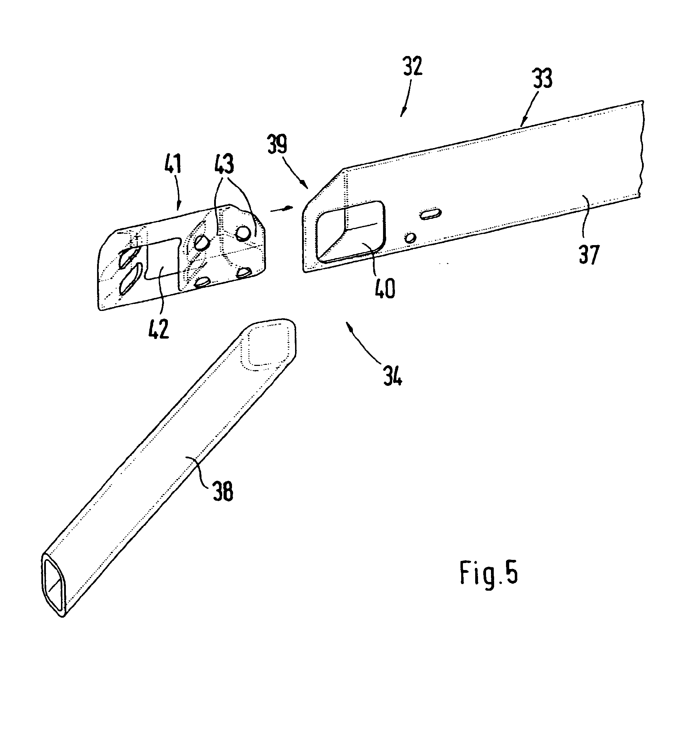

Im Ausführungsbeispiel (Figur 5) werden das Mittelteil 37 und die beiden Seitenteile 38 durch separat hergestellte Rohre gebildet, die in gemeinsamen Verbindungsbereichen 39 fest miteinander verbunden sind. Gemäß Figur 5 weisen das Mittelteil 37 und die Seitenteile 38 des Querrohrs 34 unterschiedliche Abmessungen auf. Die beiden Seitenteile 38 und das Mittelteil 37 weisen eine ähnliche polygonale Querschnittsform auf. Im Ausführungsbeispiel werden das Mittelteil 37 und die Seitenteile 38 durch hochfeste Vierkantrohre gebildet. Der Querschnitt des Querrohrs 34 könnte jedoch auch quadratisch, trapezförmig, sechseckig, achteckig oder dergleichen ausgebildet sein. Die Seitenteile 38 besitzen einen kleineren Querschnitt und insbesondere eine geringere Bauhöhe als das Mittelteil 37. Die beiden Seitenteile 38 sind in den gemeinsamen Verbindungsbereichen 39 durch Öffnungen 40 des Mittelteils 37 hindurchgeführt und ragen in den inneren Hohlraum des Mittelteils 37 hinein.

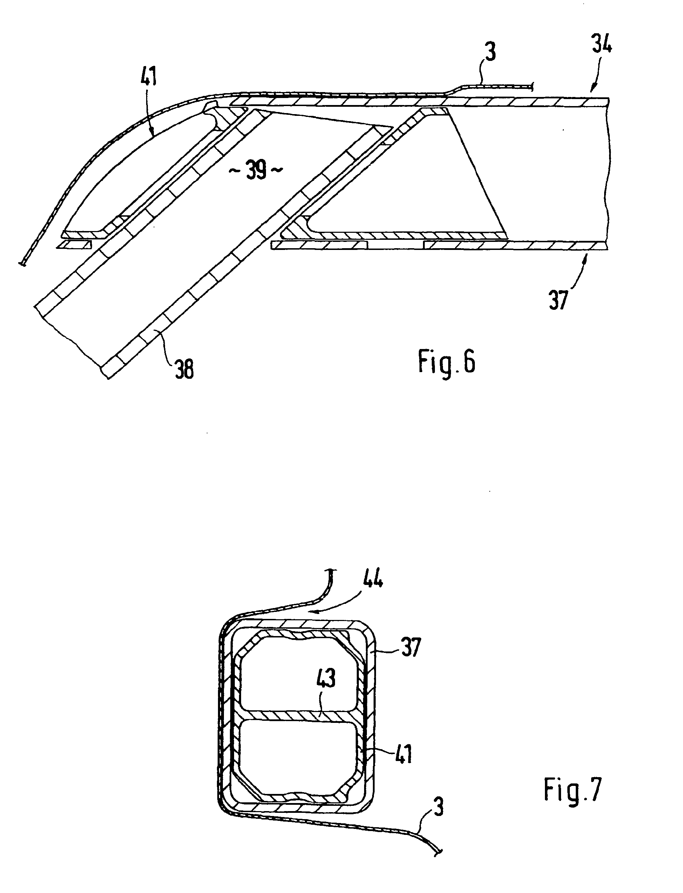

Zur Erhöhung der Energieaufnahme sind in den Verbindungsbereichen 39 jeweils Gußknoten 41 von der offenen Außenseite her in das Mittelteil 37 eingesetzt, die einerseits korrespondierende Aufnahmeabschnitt 42 für das angrenzende Seitenteil 38 aufweisen und die andererseits formschlüssig vom Mittelteil 37 aufgenommen sind. Jeder Gußknoten 41 ist mit dem Mittelteil 37 bereichsweise verschweißt. Das jeweilige Seitenteil 38 ist in den länglichen Aufnahmeabschnitten 42 des Gußknotens 41 eingesetzt und wird mit diesen und dem Mittelteil 37 verschweißt. Die Aufnahmeabschnitte 42 gewährleisten eine großflächige Führung der eingesteckten Seitenteile 38. Jeder Gußknoten 41 weist zudem Versteifungsrippen 43 auf (Fig. 6). Zur platzsparenden Unterbringung des Querrohrs 34 ist an der Stirnwand 3 eine querverlaufende stufen- oder nischenförmige Aufnahme 44 ausgebildet, die zum Fahrgastraum 2 hin offen ausgebildet ist (Fig. 7).

In diese Aufnahme 44 ist das Querrohr 34 eingesetzt. Das Querrohr 34 kann sich vollständig innerhalb der Aufnahme 44 erstrecken oder bereichsweise zum Fahrgastraum 2 hin etwas vorstehen. Im Ausführungsbeispiel weist die Aufnahme 44 einen etwa U-förmigen Querschnitt auf. Das Querrohr 34 verläuft in Höhenrichtung und Längsrichtung mit geringem Abstand zur angrenzenden Aufnahme 44. Benachbart beider vorderer Längsträger 5 ist das Querrohr 34 sowohl oben als auch unten über zumindest eine C02-Schweißung mit der Aufnahme 44 fest verbunden.

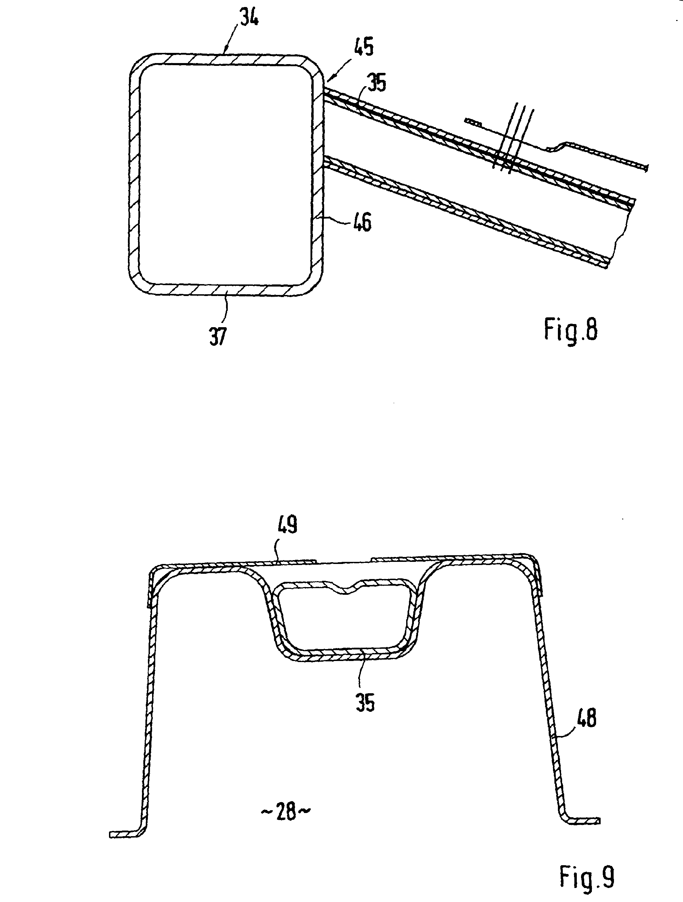

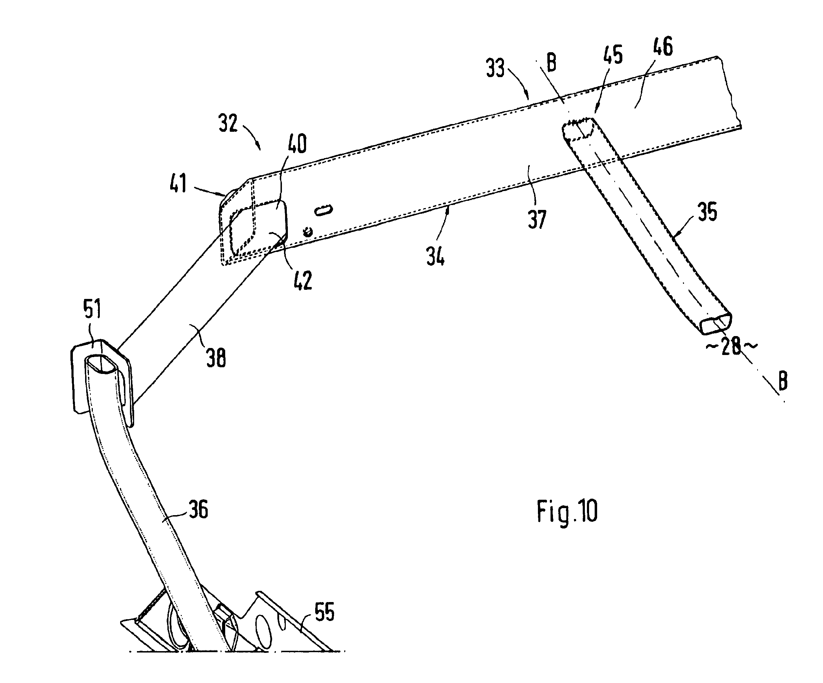

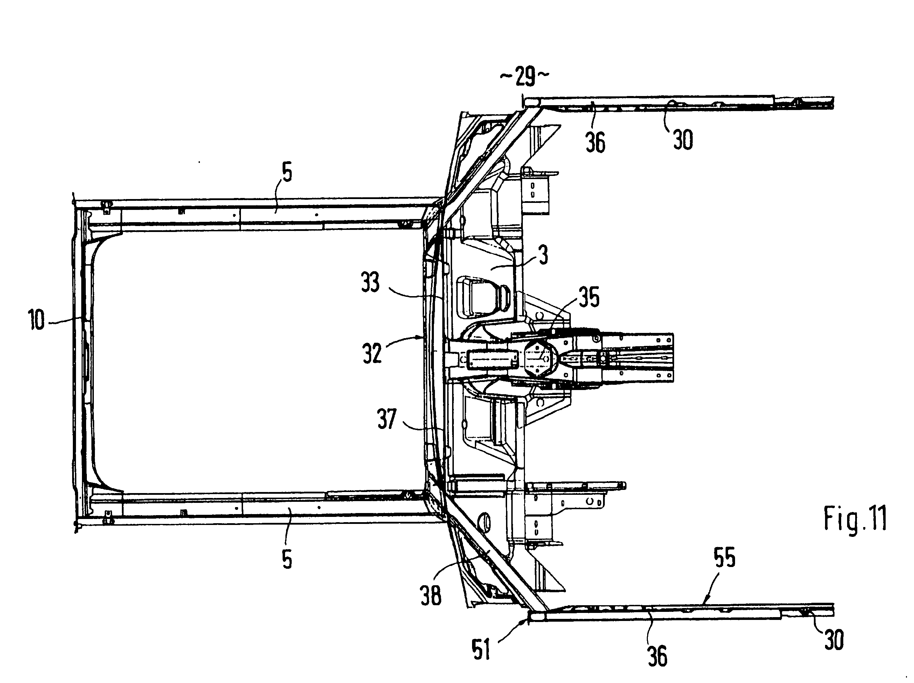

Im Bereich der Mittellängsebene B-B ist das Querrohr 34 über das mittlere Abstützrohr 35 mit dem Mitteltunnel 28 kraftübertragend verbunden. Das obere Ende 45 des mittleren Abstützrohres 35 ist mit der dem Fahrgastraum 3 zugewandten Wand 46 des Querrohres 34 bzw. des Mittelteils 37 verschweißt (Fig. 8), wogegen das untere Ende 47 des Abstützrohres 35 mit der Oberseite einer aufgesetzten Tunnelverstärkung 48 fest verbunden ist (Fig. 9). Das sich in Fahrzeuglängsrichtung (A-A) erstreckende, schrägverlaufende mittlere Abstützrohr 35 weist einen etwa trapezförmigen Querschnitt auf. Nach oben hin ist das Abstützrohr 35 durch ein Schließblech 49 verkleidet (Figur 9). Die Tunnelverstärkung 48 mit dem Schließblech 49 und das mittlere Abstützrohr 35 dienen als Frontcrashstütze.

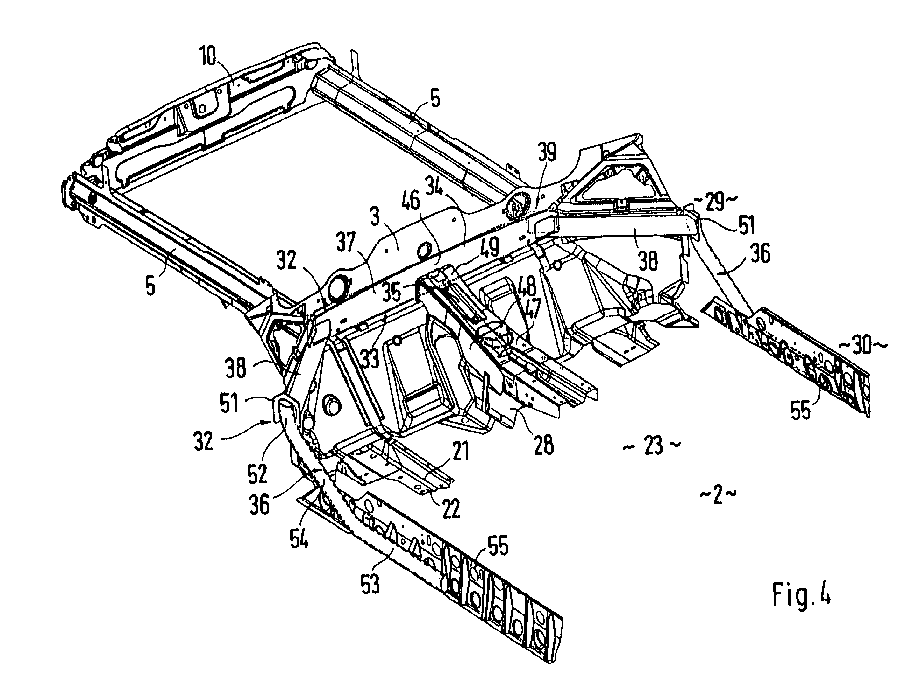

Das Querrohr 34 bzw. dessen Seitenteile 38 sind mit ihren freien seitlichen Enden durch Ausnehmungen 50 der angrenzenden Scharniersäule 29 hindurchgeführt und mit einer im Inneren der Scharniersäule 29 sich erstreckenden winkelförmigen Schaniersäulenverstärkung 51 fest verbunden. Diese ist innenseitig mit dem nicht näher dargestellten Innenblech der Scharniersäule 29 verschweißt. Darüber hinaus ist das freie Ende des Seitenteils 38 mit der Scharniersäulenverstärkung 51 durch Schweißen verbunden. Die seitlichen Abstützrohre 36 zur Abstützung der Scharniersäulen 29 an den tieferliegenden Schwellern 30 sind in Fahrzeuglängsrichtung ausgerichtet und erstrecken sich vollständig innerhalb der Scharniersäulen 29 bzw. der Schweller 30. Jedes seitliche Abstützrohr 36 besitzt im Ausführungsbeispiel einen ovalen Querschnitt, wobei sich die längeren Seiten in Fahrzeuglängsrichtung erstrecken. Gemäß Figur 4 umfaßt jedes seitliche Abstützrohr 36 einen vertikal nach oben ragenden vorderen Endbereich 52, einen horizontal ausgerichteten hinteren Endbereich 53 und einen schrägverlaufenden mittleren Bereich 54, der die Endbereiche 52, 53 miteinander verbindet. Der vertikal ausgerichtete vordere bzw. obere Endbereich 52 des Abstützrohres 36 ist auf der dem Querrohr 34 abgekehrten Seite an die innenliegende Scharniersäulenverstärkung 51 angeschweißt, wogegen der andere horizontal verlaufende Endbereich 53 des Abstützrohres 36 mit der Außenseite einer innenliegenden Schwellerverstärkung 55 fest verbunden ist, beispielsweise durch Schweißen. Der hintere Endbereich 53 der Abstützrohre 36 erstreckt sich im Ausführungsbeispiel etwa bis zu einem mittleren Bereich der Längserstreckung des Sitzquerträgers 26. Dem Sitzquerträger 26 vorgelagert sind am Boden 23 und zwar fahrgastraumseitig Y-förmige Verstärkungen 56, die an den Boden 23, das Stirnblech 3, die Schweller 30 und den Mitteltunnel 28 angebunden sind. Die Verstärkungen 56 können einstückig mit dem Sitzquerträger 26 ausgebildet sein oder aber durch separate Blechpreßteile gebildet werden. Der vordere Querträger 10, der an die Schottwand 13 angrenzende Querträger 14 und das Querrohr 34 des Rohrrahmens 32 verlaufen vorzugsweise auf der gleichen Höhe. Die beiden unteren vorderen Längsträger 5, die Stirnwand 3 und der an die Scharniersäule 29, die Schweller 30 und den Mitteltunnel 28 angebundene Rohrrahmen 33 bilden eine mittlere Lastebene bei einem frontseitigen Aufprallstoß, wobei die mittlere Lastebene die Hauptlastebene darstellt. Die oberen Längsträger 6, die an die Scharniersäulen 29 und den Windlaufquerträger 31 angeschlossen sind, bilden eine obere Lastebene.

## Patentansprüche

1. Aufbaustruktur (1) eines Personenkraftwagens mit einer zwischen dem Vorderwagen und dem Fahrgastraum angeordneten Stirnwand (3), mit zumindest zwei voneinander beabstandeten vorderen Längsträgern (5), die an die Stirnwand (3) angeschlossen sind, mit seitlich außenliegenden Schwellern (30), einem Boden (23) und aufrechten Scharniersäulen (29), wobei im Bereich der Stirnwand (3) eine Trägerstruktur (32) vorgesehen ist, über die die vorderen Längsträger (5) kraftübertragend an die aufrechten Scharniersäulen (29), die Schweller(30), die Stirnwand (3) und den Mitteltunnel (28) angeschlossen sind, wobei die Trägerstruktur (32) durch einen steifen Rohrrahmen (33) gebildet wird, der auf der dem Fahrgastraum (2) zugekehrten Seite der Stirnwand (3) angeordnet ist, wobei der Rohrrahmen (33) zumindest an die Stirnwand (3), die Scharniersäulen (29) und die darunterliegenden Schweller (30) angebunden ist und, **dadurch gekennzeichnet, dass** der Rohrrahmen (33) ein ein- oder mehrteilig ausgebildetes, etwa horizontal ausgerichtetes Querrohr (34) umfasst, das über ein mittleres Abstützrohr (35) und seitliche Abstützrohre (36) an der Aufbaustruktur (1) abgestützt ist.

2. Aufbaustruktur nach Anspruch 1, **dadurch gekennzeichnet, dass** der Rohrrahmen (33) aus hochfestem Werkstoff gefertigt ist.

3. Aufbaustruktur nach einem der vorhergehenden Ansprüche, **dadurch gekennzeichnet, dass** das Querrohr (34) aus einem querverlaufenden Mittelteil (37) und schrägverlaufenden Seitenteilen (38) besteht.

4. Aufbaustruktur nach Anspruch 3, **dadurch gekennzeichnet, dass** das Mittelteil (37) und die schrägverlaufenden Seitenteile (38) des Querrohrs (34) einstückig ausgebildet sind.

5. Aufbaustruktur nach Anspruch 3, **dadurch gekennzeichnet, dass** das Mittelteil (37) und die beiden Seitenteile (38) durch separate Rohre gebildet werden, die in gemeinsamen Verbindungsbereichen (39) fest miteinander verbunden sind.

6. Aufbaustruktur nach Anspruch 5, **dadurch gekennzeichnet, dass** das Mittelteil (37) und die Seitenteile (38) des Querrohrs (34) unterschiedliche Abmessungen aufweisen.

7. Aufbaustruktur nach Anspruch 6, **dadurch gekennzeichnet, dass** die beiden Seitenteile (38) einen kleineren Querschnitt und eine geringere Bauhöhe aufweisen als das Mittelteil (37).

8. Aufbaustruktur nach einem der vorhergehenden Ansprüche, **dadurch gekennzeichnet, dass** die Seitenteile (38) durch Öffnungen (40) des Mittelteils (37) hindurchgeführt sind und in das Innere des Mittelteils (37) hineinragen.

9. Aufbaustruktur nach einem der vorhergehenden Ansprüche, **dadurch gekennzeichnet, dass** in den gemeinsamen Verbindungsbereichen (39) der Seitenteile (38) mit dem Mittelteil (37) jeweils Gussknoten (41) das Mittelteil (37) eingesetzt sind, die einerseits das Seitenteil (38) aufnehmen und die andererseits formschlüssig vom Mittelteil (37) aufgenommen sind.

10. Aufbaustruktur nach einem der vorhergehenden Ansprüche, **dadurch gekennzeichnet, dass** die Gussknoten (41) örtlich Versteifungsrippen (43) und längsgerichtete Aufnahmeabschnitte (42) für die Seitenteile (38) aufweisen.

11. Aufbaustruktur nach einem der vorhergehenden Ansprüche, **dadurch gekennzeichnet, dass** der eingeschobene Gussknoten (41) mit dem Mittelteil (37) verschweißt ist und dass das in den Gussknoten (41) eingesetzte Seitenteil (38) mit dem Gussknoten (41) und dem Mittelteil (37) verschweißt ist.

12. Aufbaustruktur nach einem der vorhergehenden Ansprüche **dadurch gekennzeichnet, dass** an der Stirnwand (3) eine querverlaufende stufen- oder nischenförmige Aufnahme (44) ausgebildet ist, in die das Querrohr (34) zumindest abschnittsweise hineinragt.

13. Aufbaustruktur nach einem der vorhergehenden Ansprüche, **dadurch gekennzeichnet, dass** das Querrohr (34) mit seinen seitlichen Enden durch Ausnehmungen (50) der Scharniersäule (29) hindurchgeführt und im Inneren der Scharniersäule (29) mit einer Scharniersäulenverstärkung (51) fest verbunden ist.

14. Aufbaustruktur nach einem der vorhergehenden Ansprüche, **dadurch gekennzeichnet, dass** die seitlichen Abstützrohre (36) in Fahrzeuglängsrichtung ausgerichtet sind und sich vollständig innerhalb der Scharniersäulen (29) bzw. der Schweller (30) erstrecken.

15. Aufbaustruktur nach einem der vorhergehenden Ansprüche, **dadurch gekennzeichnet, dass** jedes seitliche Abstützrohr (36) einen vertikal nach oben ragenden vorderen Endbereich (52), einen etwa horizontal ausgerichteten hinteren Endbereich (53) und einen schrägverlaufenden mittleren Bereich (54) umfasst, der die beiden Endbereiche (52, 53) miteinander verbindet.

16. Aufbaustruktur nach einem der vorhergehenden Ansprüche, **dadurch gekennzeichnet, dass** der vertikal ausgerichtete vordere Endbereich (52) des Abstützrohres (36) an die innenliegende Scharniersäulenverstärkung (51) angebunden ist, wogegen der andere horizontal verlaufende Endbereich (53) des Abstützrohres (36) mit einer innenliegenden Schwellerverstärkung (55) verbunden ist.

17. Aufbaustruktur nach einem der vorhergehenden Ansprüche, **dadurch gekennzeichnet, dass** die seitlichen Abstützrohre (36) einen ovalen Querschnitt aufweisen.

18. Aufbaustruktur nach einem der vorhergehenden Ansprüche, **dadurch gekennzeichnet, dass** das Querrohr (34) und das mittlere Abstützrohr (35) einen polygonalen Querschnitt aufweisen.

19. Aufbaustruktur nach einem der vorhergehenden Ansprüche, **dadurch gekennzeichnet, dass** das mittlere Abstützrohr (35) einerseits mit dem Querrohr (34) und andererseits mit einer aufgesetzten Tunnelverstärkung (48) fest verbunden ist.

20. Aufbaustruktur nach einem der vorhergehenden Ansprüche, **dadurch gekennzeichnet, dass** die vorderen unteren Längsträger (5) über einen vorderen hohlträgerartigen Querträger (10) und einen weiteren, an die Schottwand (13) angeschlossenen Querträger (14) kraftübertragend miteinander verbunden sind.

21. Aufbaustruktur nach einem der vorhergehenden Ansprüche, **dadurch gekennzeichnet, dass** zumindest die inneren Trägerabschnitte (8) der unteren vorderen Längsträger (5) in Tailored-Blank-Bauweise ausgebildet sind, wobei die Wanddicke der Trägerabschnitte (8) zur Stirnwand (3) hin zunimmt.

## Claims

1. A body structure (1) of a passenger vehicle, with an end wall (3) arranged between the forward section and the passenger compartment, with at least two front longitudinal beams (5) which are spaced apart and are connected to the end wall (3), with laterally outer sills (30), a floor (23) and upright hinge pillars (29), wherein, in the region of the end wall (3), a supporting structure (32) is provided, by means of which the front longitudinal beams (5) are connected in a force-transmitting manner to the upright hinge pillars (29), the sills (30), the end wall (3) and the centre tunnel (28), wherein the supporting structure (32) is formed by a rigid tubular frame (33) arranged on the side of the end wall (3) facing the passenger compartment (2), wherein the tubular frame (33) is connected at least to the end wall (3), the hinge pillars (29) and the sills (30) lying thereunder, and **characterised in that** the tubular frame (33) comprises a one-piece or multi-piece, approximately horizontally arranged transverse tube (34) which is supported on the body structure (1) by a middle supporting tube (35) and lateral supporting tubes (36).

2. A body structure according to claim 1, **characterised in that** the tubular frame (33) is manufactured from high-strength material.

3. A body structure according to either one of the preceding claims, **characterised in that** the transverse tube (34) comprises a transversely extending middle part (37) and obliquely extending side parts (38).

4. A body structure according to claim 3, **characterised in that** the middle part (37) and the obliquely extending side parts (38) of the transverse tube (34) are formed in one piece.

5. A body structure according to claim 3, **characterised in that** the middle part (37) and the two side parts (38) are formed by separate tubes which are fixedly connected to one another in common connecting regions (39).

6. A body structure according to claim 5, **characterised in that** the middle part (37) and the side parts (38) of the transverse tube (34) have different dimensions.

7. A body structure according to claim 6, **characterised in that** the two side parts (38) have a smaller cross-section and a lower overall height than the middle part (37).

8. A body structure according to any one of the preceding claims, **characterised in that** the side parts (38) are guided through openings (40) in the middle part (37) and project into the interior of the middle part (37).

9. A body structure according to any one of the preceding claims, **characterised in that**, in the common connecting regions (39) between the side parts (38) and the middle part (37), respective cast joints (41) are inserted into the middle part (37) and on the one hand receive the side part (38) and on the other hand are positively held by the middle part (37).

10. A body structure according to any one of the preceding claims, **characterised in that** the cast joints (41) locally have stiffening ribs (43) and longitudinally extending receiving portions (42) for the side parts (38).

11. A body structure according to any one of the preceding claims, **characterised in that** the inserted cast joint (41) is welded to the middle part (37) and **in that** the side part (38) inserted into the cast joint (41) is welded to the cast joint (41) and the middle part (37).

12. A body structure according to any one of the preceding claims, **characterised in that** a transversely extending step- or niche-type recess (44), into which the transverse tube (34) at least partly projects, is formed in the end wall (3).

13. A body structure according to any one of the preceding claims, **characterised in that** the transverse tube (34) is guided by its lateral ends through openings (50) in the hinge pillar (29) and is fixedly connected to a hinge-pillar reinforcement (51) inside the hinge pillar (29).

14. A body structure according to any one of the preceding claims, **characterised in that** the lateral supporting tubes (36) are arranged in the longitudinal direction of the vehicle and extend entirely within the hinge pillars (29) and the sills (30).

15. A body structure according to any one of the preceding claims, **characterised in that** each lateral supporting tube (36) comprises a front end region (52) projecting vertically upwards, an approximately horizontally arranged rear end region (53) and an obliquely extending middle region (54) which connects the two end regions (52, 53) together.

16. A body structure according to any one of the preceding claims, **characterised in that** the vertically extending front end region (52) of the supporting tube (36) is connected to the internal hinge-pillar reinforcement (51), while the other, horizontally extending end region (53) of the supporting tube (36) is connected to an internal sill reinforcement (55).

17. A body structure according to any one of the preceding claims, **characterised in that** the lateral supporting tubes (36) have an oval cross-section.

18. A body structure according to any one of the preceding claims, **characterised in that** the transverse tube (34) and the middle supporting tube (35) have a polygonal cross-section.

19. A body structure according to any one of the preceding claims, **characterised in that** the middle supporting tube (35) is fixedly connected on the one hand to the transverse tube (34) and on the other hand to an attached tunnel reinforcement (48).

20. A body structure according to any one of the preceding claims, **characterised in that** the lower front longitudinal beams (5) are connected to one another in a force-transmitting manner by a front transverse beam (10) in the form of a hollow beam and a further transverse beam (14) connected to the partition wall (13).

21. A body structure according to any one of the preceding claims, **characterised in that** at least the inner beam portions (8) of the lower front longitudinal beams (5) are formed as tailored blanks, wherein the wall thickness of the beam portions (8) increases towards the end wall (3).

## Revendications

1. Structure de carrosserie (1) d'un véhicule de tourisme, comportant une paroi frontale (3), disposée entre l'avant du véhicule et l'habitacle, au moins deux longerons (5) avant disposés à distance l'un de l'autre et assemblés à la paroi frontale (3), des seuils de porte (30) situés latéralement à l'extérieur, un plancher (23) et des montants à charnières (29) verticaux, une structure portante (32) étant prévue dans la zone de la paroi frontale (3), par laquelle les longerons (5) avant sont assemblés avec transmission de force aux montants à charnières (29) verticaux, aux seuils de porte (30), à la paroi frontale (3) et au tunnel central (28), la structure portante (32) étant formée par un châssis tubulaire (33) rigide, qui est monté sur le côté de la paroi frontale (3) orienté vers l'habitacle (2) du véhicule, le châssis tubulaire (33) étant lié au moins à la paroi frontale (3), aux montants à charnières (29) et aux seuils de porte (30) situés en dessous de ceux-ci, **caractérisée en ce que** le châssis tubulaire (33) comporte un tube transversal (34) réalisé en une ou plusieurs parties et orienté sensiblement horizontalement, lequel est en appui sur la structure de carrosserie (1) par l'intermédiaire d'un tube de support central (35) et de tubes de support latéraux (36).

2. Structure de carrosserie selon la revendication 1, **caractérisée en ce que** le châssis tubulaire (33) est réalisé dans un matériau très résistant.

3. Structure de carrosserie selon l'une quelconque des revendications précédentes, **caractérisée en ce que** le tube transversal (34) est formé par une partie centrale (37) orientée transversalement et des parties latérales (38) orientées en biais.

4. Structure de carrosserie selon la revendication 3, **caractérisée en ce que** la partie centrale (37) et les parties latérales (38), orientées en biais, du tube transversal (34) sont réalisées d'un seul tenant.

5. Structure de carrosserie selon la revendication 3, **caractérisée en ce que** la partie centrale (37) et les deux parties latérales (38) sont formées par des tubes séparés, qui sont assemblés fermement entre eux dans des zones d'assemblage (39) communes.

6. Structure de carrosserie selon la revendication 5, **caractérisée en ce que** la partie centrale (37) et les parties latérales (38) du tube transversal (34) ont des dimensions différentes.

7. Structure de carrosserie selon la revendication 6, **caractérisée en ce que** les deux parties latérales (38) ont une section plus petite et une hauteur d'encombrement plus faible que la partie centrale (37).

8. Structure de carrosserie selon l'une quelconque des revendications précédentes, **caractérisée en ce que** les parties latérales (38) sont guidées à travers des ouvertures (40) de la partie centrale (37) et s'engagent à l'intérieur de la partie centrale (37).

9. Structure de carrosserie selon l'une quelconque des revendications précédentes, **caractérisée en ce que**, dans les zones d'assemblage (39) communes des parties latérales (38) avec la partie centrale (37), des noeuds en fonte (41) sont insérés respectivement dans la partie centrale (37), lesquels, sur un côté, reçoivent la partie latérale (38) et, sur l'autre côté, sont logés par emboîtement dans la partie centrale (37).

10. Structure de carrosserie selon l'une quelconque des revendications précédentes, **caractérisée en ce que** les noeuds en fonte (41) comportent localement des nervures de raidissement (43) et des tronçons de réception (42), orientés longitudinalement, pour les parties latérales (38).

11. Structure de carrosserie selon l'une quelconque des revendications précédentes, **caractérisée en ce que** le noeud en fonte (41) inséré est soudé avec la partie centrale (37) et **en ce que** la partie latérale (38) insérée dans le noeud en fonte (41) est soudée avec le noeud en fonte (41) et la partie centrale (37).

12. Structure de carrosserie selon l'une quelconque des revendications précédentes, **caractérisée en ce que** sur la paroi frontale (3) est réalisé un logement (44) étagé ou en forme de niche, orienté transversalement, dans lequel s'avance au moins par tronçons le tube transversal (34).

13. Structure de carrosserie selon l'une quelconque des revendications précédentes, **caractérisée en ce que** le tube transversal (34) est guidé avec ses extrémités latérales à travers des évidements (50) du montant à charnières (29) et, à l'intérieur du montant à charnières (29), est assemblé fermement à un renfort (51) du montant à charnières.

14. Structure de carrosserie selon l'une quelconque des revendications précédentes, **caractérisée en ce que** les tubes de support (36) latéraux sont orientés dans le sens longitudinal du véhicule et s'étendent entièrement à l'intérieur des montants à charnières (29) ou des seuils de porte (30).

15. Structure de carrosserie selon l'une quelconque des revendications précédentes, **caractérisée en ce que** chaque tube de support (36) latéral comporte une zone d'extrémité avant (52) s'avançant verticalement vers le haut, une zone d'extrémité arrière (53) orientée sensiblement horizontalement et une zone centrale (54) orientée en biais, laquelle relie les deux zones d'extrémité (52, 53) entre elles.

16. Structure de carrosserie selon l'une quelconque des revendications précédentes, **caractérisée en ce que** la zone d'extrémité avant (52), orientée verticalement, du tube de support (36) est liée au renfort (51) intérieur du montant à charnières, alors que l'autre zone d'extrémité (53) orientée horizontalement du tube de support (36) est reliée à un renfort (55) intérieur des seuils de porte.

17. Structure de carrosserie selon l'une quelconque des revendications précédentes, **caractérisée en ce que** les tubes de support (36) latéraux ont une section ovale.

18. Structure de carrosserie selon l'une quelconque des revendications précédentes, **caractérisée en ce que** le tube transversal (34) et le tube de support central (35) ont une section polygonale.

19. Structure de carrosserie selon l'une quelconque des revendications précédentes, **caractérisée en ce que** le tube de support central (35) est relié, sur un côté, au tube transversal (34) et, sur l'autre côté, à un renfort (48) vertical du tunnel central.

20. Structure de carrosserie selon l'une quelconque des revendications précédentes, **caractérisée en ce que** les longerons (5) avant inférieurs sont reliés l'un à l'autre avec transmission de force par l'intermédiaire d'une traverse (10) avant creuse et d'une autre traverse (14) assemblée à la cloison étanche (13).

21. Structure de carrosserie selon l'une quelconque des revendications précédentes, **caractérisée en ce qu'**au moins les tronçons de support intérieurs (8) des longerons (5) avant inférieurs sont réalisés selon le mode de construction à flan façonné (tailored blank), l'épaisseur de la paroi des tronçons de support (8) augmentant vers la paroi frontale (3).
